# EUROPEAN PATENT APPLICATION

(11) **EP 4 836 132 A1**
(43) Date of publication of application: **04.11.2026**
(21) Application number: 24909890.6
(22) Date of filing: 23.08.2024
(51) Int. Cl.: H01M 50/244, H01M 50/204, H01M 10/613, H01M 10/6568

(54) **BATTERY TRAY ASSEMBLY, BATTERY PACK, AND ELECTRICAL DEVICE**

(30) Priority: 29.12.2023 CN 202323661832 U
(71) Applicant: BYD Company Limited, Shenzhen, Guangdong 518118 (CN)
(72) Inventor: ZHANG, Haitao, Shenzhen, Guangdong 518118 (CN); YANG, Lei, Shenzhen, Guangdong 518118 (CN); MO, Kaizhi, Shenzhen, Guangdong 518118 (CN); DENG, Xuemei, Shenzhen, Guangdong 518118 (CN); CHEN, Zhihui, Shenzhen, Guangdong 518118 (CN)
(74) Representative: Mathys & Squire
(86) International application number: PCT/CN2024/114143
(87) International publication number: WO 2025/138940

(57) **Abstract**

A battery tray assembly, a battery pack, and an electrical device are provided. The battery tray assembly includes a battery tray, a bottom guard plate, and a connection member. The battery tray includes a bottom plate, the connection member is fastened to a surface of the bottom plate that faces the bottom guard plate, and the bottom guard plate is connected to the connection member.

## Description

This application claims priority to Chinese Patent Application No. 202323661832.1, filed with the China National Intellectual Property Administration on December 29, 2023 and entitled "BATTERY TRAY ASSEMBLY, BATTERY PACK, AND ELECTRICAL DEVICE", which is incorporated herein by reference in its entirety.

### TECHNICAL FIELD

The present disclosure relates to the field of battery technologies, and in particular, to a battery tray assembly, a battery pack including the battery tray assembly, and an electrical device including the battery pack.

### BACKGROUND

In conventional technologies, a battery tray assembly of a battery pack usually includes a bottom plate and a bottom guard plate. An upper end of the bottom plate is configured to bear a battery, and the bottom guard plate is disposed at the bottom of the bottom plate, to prevent, when the bottom is impacted, the bottom plate from being directly damaged and thus damaging the battery. The bottom guard plate is usually fastened to the bottom plate by riveting using a rivet extending through the bottom plate and the bottom guard plate. If the riveting is defective or the riveting is loose, external liquid flows into the battery tray assembly from a riveting point, resulting in poor sealing performance of the battery pack.

### SUMMARY

In view of the shortcomings of the conventional technologies, an objective of the present disclosure is to provide a battery tray assembly that improves sealing performance. Specifically, the following technical solutions are included.

According to a first aspect, an embodiment of the present disclosure provides a battery tray assembly, including a battery tray, a bottom guard plate, and a connection member. The battery tray includes a bottom plate, the connection member is fastened to a surface of the bottom plate that faces the bottom guard plate, and the bottom guard plate is connected to the connection member.

In the battery tray assembly of the present disclosure, the connection member is disposed on the bottom plate of the battery tray, so that the bottom plate and the bottom guard plate are fastened through the connection member, to prevent a connection between the bottom plate and the bottom guard plate from affecting sealing performance of the bottom plate, thereby improving sealing performance of the battery tray assembly of the present disclosure.

In an embodiment, in a direction from the bottom plate toward the bottom guard plate, one end of the connection member is fastened to the bottom plate, and the other end of the connection member is provided with a connection hole, the battery tray assembly further includes a fastener, and the fastener passes through the bottom guard plate and is connected to the connection hole, to implement a fixed connection between the bottom guard plate and the bottom plate.

In an embodiment, a flow channel is provided inside the bottom plate, and the flow channel is configured for circulating a heat exchange medium to implement heat exchange of a battery.

In an embodiment, the bottom plate includes a vapor chamber and a flow channel plate that are fastened, the flow channel plate is located between the vapor chamber and the bottom guard plate, a surface of the flow channel plate that faces the vapor chamber is provided with a groove, and the vapor chamber covers the groove, to cooperatively form the flow channel.

In an embodiment, the connection member is disposed on a side of the flow channel plate that is away from the vapor chamber, and is fastened to the flow channel plate.

In an embodiment, the flow channel plate is provided with a clearance hole, the clearance hole and the groove are spaced apart from each other in a plane direction of the flow channel plate, the connection member is provided with a protrusion portion, and the protrusion portion is embedded in the clearance hole.

In an embodiment, in a plane direction of the flow channel plate, the groove is provided in the middle of the flow channel plate, and edge regions of the flow channel plate and the vapor chamber are attached to each other; and there are a plurality of disposed connection members, and the plurality of connection members are arranged in a circumferential direction of the flow channel plate.

In an embodiment, the vapor chamber is brazed to the flow channel plate, and/or the flow channel plate is brazed to the connection member.

In an embodiment, circumferential edges of the vapor chamber and the flow channel plate each extend toward a direction away from the bottom guard plate and are connected to each other to form a side plate, the side plate and the bottom plate form an accommodation cavity, and the accommodation cavity is configured to accommodate the battery.

In an embodiment, the battery tray assembly further includes a sealing member, and the sealing member is attached between circumferential edges of the bottom plate and the bottom guard plate.

In an embodiment, the circumferential edge of the bottom guard plate is provided with a flange structure facing the bottom plate, and the sealing member is attached to an inner side of the flange structure.

In an embodiment, the battery tray assembly further includes a buffer plate, the buffer plate is disposed between the bottom plate and the bottom guard plate, and the buffer plate is at least attached to the bottom plate or the bottom guard plate.

In an embodiment, a surface of the bottom guard plate that is away from the bottom plate is provided with a plurality of mounting bosses that are spaced apart from each other, and the plurality of mounting bosses are configured to be fastened to an external protection structure.

In an embodiment, a side of the bottom guard plate that faces the bottom plate is provided with a plurality of mounting portions that are spaced apart from each other, and the mounting portion is configured to be fastened to an external protection structure.

In an embodiment, a surface of the bottom guard plate that is away from the bottom plate is coated with a protection layer.

According to a second aspect, an embodiment of the present disclosure provides a battery pack, including a battery and a battery tray assembly, wherein the battery is accommodated in the battery tray assembly.

According to a third aspect, an embodiment of the present disclosure provides an electrical device, including a battery pack.

It will be understood that the battery pack provided in the second aspect of the present disclosure and the electrical device provided in the third aspect both have effect of improving sealing performance due to use of the battery tray assembly provided in the first aspect of the present disclosure.

### BRIEF DESCRIPTION OF DRAWINGS

FIG. 1 is a schematic exploded view of a battery pack according to an embodiment of the present disclosure;
FIG. 2 is a partial cross-sectional diagram of a battery tray assembly according to an embodiment of the present disclosure;
FIG. 3 is a diagram of a partial structure of a battery tray assembly according to an embodiment of the present disclosure;
FIG. 4 is a partially enlarged diagram of a battery tray assembly according to an embodiment of the present disclosure;
FIG. 5 is another partial cross-sectional diagram of a battery tray assembly according to an embodiment of the present disclosure;
FIG. 6 is a diagram of a structure of a bottom guard plate according to an embodiment of the present disclosure;
FIG. 7 is a partially enlarged diagram of a bottom guard plate according to an embodiment of the present disclosure;
FIG. 8 is another partial cross-sectional diagram of a battery tray assembly according to an embodiment of the present disclosure; and
FIG. 9 is a block diagram of a structure of an electrical device according to an embodiment of the present disclosure.

### DESCRIPTION OF EMBODIMENTS

To facilitate understanding of the present disclosure, the following describes the present disclosure more comprehensively with reference to related accompanying drawings. The accompanying drawings illustrate preferred implementations of the present disclosure. However, the present disclosure may be implemented in many different forms, and is not limited to implementations described in this specification. On the contrary, an objective of providing these implementations is to make the content disclosed in the present disclosure more thoroughly and comprehensively understood.

The following descriptions of embodiments are with reference to the accompanying illustrations, which illustrate specific embodiments that can be implemented in the present disclosure. In this specification, the sequence numbers such as "first" and "second" of components are merely intended to distinguish between the described objects, and do not have any sequential or technical meaning. Unless otherwise specified, the terms "connection" and "linkage" used in the present disclosure include both direct and indirect connections (linkages). The directional terms mentioned in the present disclosure, for example, "up", "down", "front", "back", "left", "right", "inner", "outer", and "side", are merely directions based on the accompanying drawings. Therefore, the directional terms used are used to better and more clearly describe and understand the present disclosure, instead of indicating or implying that a specified apparatus or element should have a specific orientation and be constructed and operated in a specific orientation. Therefore, this cannot be understood as a limitation on the present disclosure.

In the descriptions of the present disclosure, it will be noted that, unless otherwise clearly specified and limited, terms "mount", "interconnect", and "connect" will be understood in a broad sense. For example, such terms may indicate a fixed connection, a detachable connection, or an integral connection; or may indicate a mechanical connection; or may indicate direct interconnection, indirect interconnection through an intermediate medium, or internal communication between two elements. A person of ordinary skill in the art may understand specific meanings of the foregoing terms in the present disclosure based on specific situations. It will be noted that the terms "first", "second", and the like in this specification, claims, and accompanying drawings of the present disclosure are intended to distinguish between different objects but do not indicate a particular order. Furthermore, the terms "comprising", "may include", "include", or "may include" used in the present disclosure indicate presence of corresponding functions, operations, elements, and the like that are disclosed, but do not limit other one or more additional functions, operations, elements, and the like. In addition, the term "include" or "contain" indicates presence of a corresponding feature, quantity, step, operation, element, component, or a combination thereof disclosed in this specification, but does not exclude presence or addition of one or a plurality of other features, quantities, steps, operations, elements, components, or combinations thereof, and is intended to cover a non-exclusive inclusion.

Unless otherwise defined, all technical and scientific terms used in this specification have the same meanings as those usually understood by a person skilled in the art of the present disclosure. The terms used in this specification of the present disclosure are merely for the purpose of describing specific implementations, and are not intended to limit the present disclosure.

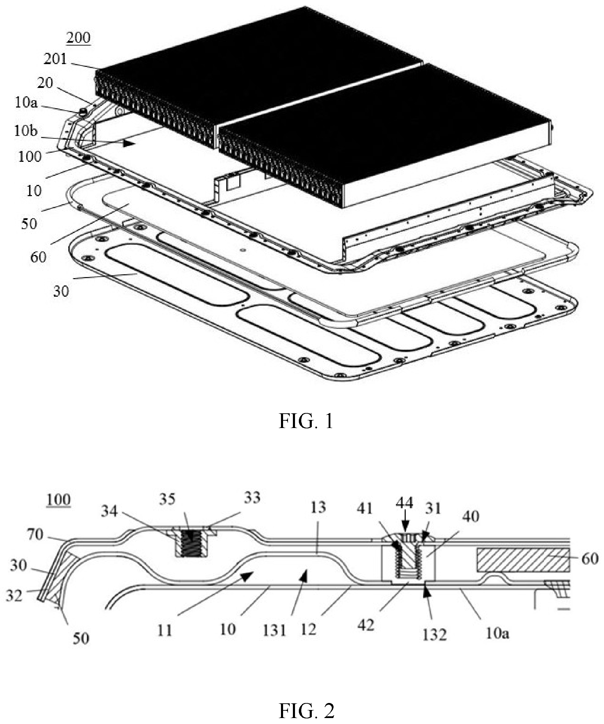

FIG. 1 is a schematic exploded view of a battery pack 200 according to an embodiment of the present disclosure.

As shown in FIG. 1, the battery pack 200 of the present disclosure includes a battery 201 and a battery tray assembly 100. There are a plurality of disposed batteries 201. A plurality of batteries 201 are connected in series or in parallel. The batteries 201 connected in series can increase a voltage of the battery pack 200, and the batteries 201 connected in parallel can increase a capacity of the battery pack 200. Therefore, it will be understood that, the parallel or series connection between the plurality of batteries 201 makes the batteries 201 match each other, thereby forming a battery pack 200 with a specific voltage and a specific capacity to meet different use requirements of an electrical device. For ease of description, in subsequent embodiments of the present disclosure, the electrical device corresponding to the battery pack is set as a vehicle.

The battery tray assembly 100 includes a battery tray 10a. An accommodation cavity 10b is provided in the battery tray 10a. The plurality of batteries 201 are disposed in the accommodation cavity 10b, to prevent external impurities from directly acting on a housing of the battery 201 (not shown in the figure), thereby protecting each battery 201 and ensuring use safety of the battery pack 200 of the present disclosure.

In an embodiment, as shown in FIG. 1, the battery tray 10a of the present disclosure includes a bottom plate 10 and a side plate 20, and the battery tray assembly 100 of the present disclosure further includes a bottom guard plate 30. The side plate 20 surrounds an outer edge of the bottom plate 10 and forms the accommodation cavity 10b to accommodate the battery 201. The bottom guard plate 30 is located on a side of the bottom plate 10 that is away from the accommodation cavity 10b, and is fastened to the bottom plate 10.

Specifically, FIG. 2 is a partial cross-sectional diagram of the battery tray assembly 100 according to an embodiment of the present disclosure. Reference is made to FIG. 1 for further details.

As shown in FIG. 1 and FIG. 2, the battery tray assembly 100 of the present disclosure further includes a connection member 40. The connection member 40 is fastened to a surface of the bottom plate 10 that faces the bottom guard plate 30. The connection member 40 extends toward the bottom guard plate 30, and the bottom guard plate 30 is fastened to the connection member 40, thereby implementing mutual fastening between the bottom guard plate 30 and the bottom plate 10. It will be understood that, providing the bottom guard plate 30 prevents external impurities from directly damaging the bottom plate 10, thereby ensuring integrity and use safety of the battery 201 accommodated in the accommodation cavity 10b. This improves protective performance of the battery tray assembly 100 of the present disclosure.

Therefore, compared with conventional technologies that use riveting to fasten the bottom plate to the bottom guard plate, in the battery tray assembly 100 of the present disclosure, providing the connection member 40 on the bottom plate 10 of the battery tray 10a permits a connection between the bottom guard plate 30 and the bottom plate 10, avoids damage to the bottom plate 10 caused by providing a riveting hole, and also avoids a case in which external liquid enters the battery tray assembly 100 due to poor riveting or loose rivets, thereby improving sealing performance of the battery tray assembly 100 of the present disclosure.

It will be understood that, in some other embodiments, the battery tray assembly 100 of the present disclosure further includes a second connection member. The second connection member is fastened to a surface of the bottom guard plate 30 that faces the bottom plate 10, and extends toward the bottom plate 10. The bottom plate 10 is connected to the second connection member, to implement a fixed connection between the bottom plate 10 and the bottom guard plate 30. In some other embodiments, the battery tray assembly 100 of the present disclosure may alternatively include both the connection member 40 and the second connection member. This is not particularly limited in the present disclosure.

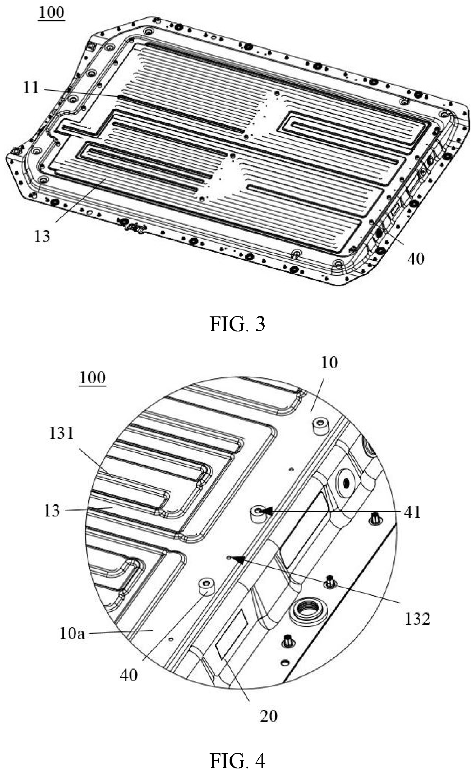

FIG. 3 is a diagram of a partial structure of the battery tray assembly 100 according to an embodiment of the present disclosure, and FIG. 4 is a partially enlarged diagram of the battery tray assembly 100 according to an embodiment of the present disclosure. Reference is made to FIG. 1 and FIG. 2 for further details. FIG. 4 is a partially enlarged diagram of FIG. 3.

As shown in FIG. 1 to FIG. 4, in an arrangement direction of the bottom plate 10 and the bottom guard plate 30, one end of the connection member 40 is fastened to the bottom plate 10, and the other end of the connection member 40 is provided with a connection hole 41. The bottom guard plate 30 is provided with a positioning hole 31. The connection member 40 abuts against the surface of the bottom guard plate 30 that faces the bottom plate 10, and the connection hole 41 corresponding to the connection member 40 is aligned with the positioning hole 31.

As shown in FIG. 2, an external fastener 44 can extend into the connection hole 41 through the positioning hole 31, to implement a fixed connection between the bottom guard plate 30 and the connection member 40, thereby implementing a fixed connection between the bottom guard plate 30 and the bottom plate 10.

Specifically, as shown in FIG. 2, the connection hole 41 is provided with a thread, and a screw may be used, with a threaded end of the screw extending into the connection hole 41 through the positioning hole 31, such that the threaded end of the screw cooperates with the internal thread of the connection hole 41, to fasten the bottom guard plate 30 to the connection member 40. In another embodiment, a solder may alternatively be filled into the positioning hole 31 and the connection hole 41, to implement a fixed connection between the bottom guard plate 30 and the connection member 40 through welding. In some other embodiments, a fixed connection configuration between the connection member 40 and the bottom guard plate 30 may alternatively be another configuration. This is not particularly limited in the present disclosure.

In an embodiment, as shown in FIG. 1 to FIG. 4, the bottom plate 10 is further provided with a flow channel 11. The flow channel 11 communicates with an external heat exchange medium source. During use of the battery pack 200, the battery 201 inside the battery tray assembly 100 generates heat, and the heat may affect use performance of the battery 201. In this way, it will be understood that providing the flow channel 11 in the bottom plate 10 can make a heat exchange medium in the external heat exchange medium source flow into the flow channel 11, and dissipate heat for the battery 201 through the bottom plate 10, thereby reducing overall temperature of the battery pack 200 and ensuring use performance of the battery pack 200 of the present disclosure.

Specifically, in an embodiment, as shown in FIG. 2 to FIG. 4, the bottom plate 10 includes a vapor chamber 12 and a flow channel plate 13. In the arrangement direction of the bottom plate 10 and the bottom guard plate 30, the flow channel plate 13 is located between the vapor chamber 12 and the bottom guard plate 30. A surface of the flow channel plate 13 that faces the vapor chamber 12 is provided with a groove 131, and the vapor chamber 12 covers the groove 131, to form the flow channel 11.

During use of the battery pack 200, heat generated by the battery 201 is transferred to the vapor chamber 12. This part of heat is distributed around in a plane direction of the vapor chamber 12 through the vapor chamber 12 and is absorbed by different heat exchange media in the groove 131, thereby implementing a heat dissipation function of the battery 201.

In addition, as shown in FIG. 2 to FIG. 4, the connection member 40 is disposed on a side of the flow channel plate 13 that is away from the vapor chamber 12, and is fastened to the flow channel plate 13. It will be understood that fastening the connection member 40 to the side of the flow channel plate 13 that is away from the vapor chamber 12 can avoid impact, on the vapor chamber 12, of disposing of the connection member 40, and avoid damage to sealing performance of the bottom plate 10 during a connection between the bottom plate 10 and the bottom guard plate 30. In this way, a fixed connection between the bottom plate 10 and the bottom guard plate 30 and a heat dissipation function of the bottom plate 10 are permitted, and sealing performance of the battery tray assembly 100 of the present disclosure is also ensured.

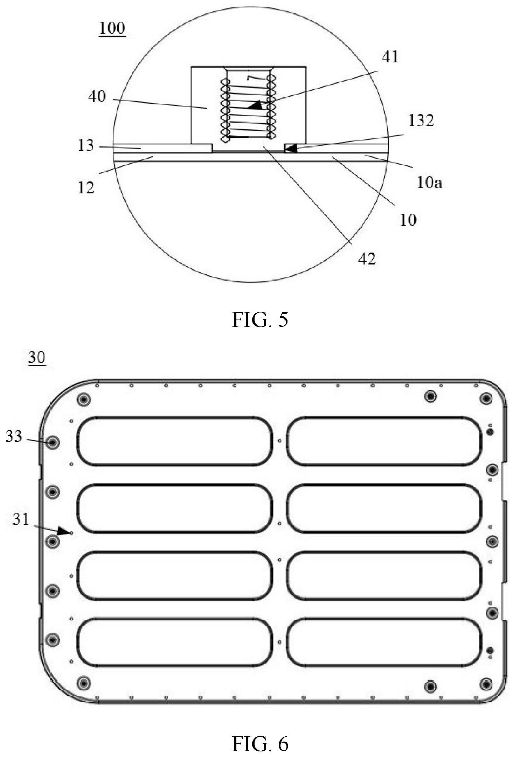

Specifically, FIG. 5 is another partial cross-sectional diagram of the battery tray assembly 100 according to an embodiment of the present disclosure. Reference is made to FIG. 2 and FIG. 4 for further details. FIG. 5 is a partial cross-sectional diagram of FIG. 4.

As shown in FIG. 2, FIG. 4 and FIG. 5, the flow channel plate 13 is further provided with a clearance hole 132. In a plane direction of the flow channel plate 13, the clearance hole 132 and the groove 131 are spaced apart from each other. An end portion of the connection member 40 that is away from the connection hole 41 is provided with a protrusion portion 42. The protrusion portion 42 extends toward the flow channel plate 13 and is embedded in the clearance hole 132.

During disposing of the connection member 40, it needs to be ensured that the connection member 40 and the flow channel plate 13 are in contact with each other. In this way, it will be understood that, providing the protrusion portion 42 increases a contact area between the connection member 40 and the flow channel plate 13, thereby increasing a connection area between the connection member 40 and the flow channel plate 13, preventing the connection member 40 from detaching from the flow channel plate 13 during use, and improving reliability of connection between the connection member 40 and the flow channel plate 13. This improves reliability of connection between the bottom plate 10 and the bottom guard plate 30, and improves sealing performance of the battery tray assembly 100 of the present disclosure.

In addition, the clearance hole 132 and the groove 131 being spaced apart from each other can further prevent external liquid from entering the groove 131 through the clearance hole 132, thereby preventing contaminating heat exchange efficiency of the heat exchange medium. This also prevents the heat exchange medium from flowing out and affecting sealing performance of the battery tray assembly 100. In addition, matching arrangement of the clearance hole 132 and the protrusion portion 42 can also improve positioning efficiency of the connection member 40, thereby improving assembly efficiency of the battery tray assembly 100 of the present disclosure.

In an embodiment, the connection member 40 and the flow channel plate 13 may be fastened by means of welding. In some other embodiments, the connection member 40 and the flow channel plate 13 may alternatively be connected by other means. For example, the connection member 40 and the flow channel plate 13 are connected by means of adhesive bonding. This is not particularly limited in the present disclosure.

In an embodiment, as shown in FIG. 2 to FIG. 4, the groove 131 is provided in the middle of the flow channel plate 13 in the plane direction of the flow channel plate 13. An edge region that is of the flow channel plate 13 and on which the groove 131 is not provided and an edge region of the vapor chamber 12 are attached to each other, so as to avoid a possibility that the heat exchange medium flowing in the groove 131 flows out between the flow channel plate 13 and the vapor chamber 12, and further improve sealing performance of the battery tray assembly 100 of the present disclosure.

There are a plurality of disposed connection members 40, and the plurality of connection members 40 are spaced apart. There are also a plurality of provided clearance holes 132. A quantity of the clearance holes 132 is the same as a quantity of the connection members 40. The plurality of clearance holes 132 are arranged in a circumferential direction of the flow channel plate 13, and a protrusion portion 42 of each connection member 40 is embedded in one clearance hole 132.

The bottom guard plate 30 is fastened to the bottom plate 10 through the connection member 40. In this way, it will be understood that, providing the plurality of connection members 40 improves reliability of connection between the bottom guard plate 30 and the bottom plate 10, and avoids a possibility that a connection between the bottom guard plate 30 and the bottom plate 10 is affected due to damage to a single connection member 40. This improves reliability of the battery tray assembly 100 of the present disclosure.

In an embodiment, the vapor chamber 12 and the flow channel plate 13 are connected through brazing. The flow channel plate 13 and the connection member 40 are connected through brazing. It will be understood that in some other embodiments, a connection configuration between the vapor chamber 12 and the flow channel plate 13 may alternatively be another configuration. In some other embodiments, a connection configuration between the flow channel plate 13 and the connection member 40 may alternatively be another configuration. This is not particularly limited in the present disclosure.

In an embodiment, reference is made back to FIG. 1 and FIG. 3. In an arrangement direction of the vapor chamber 12 and the flow channel plate 13, a circumferential edge of the vapor chamber 12 extends in a direction away from the bottom guard plate 30, and a circumferential edge of the flow channel plate 13 also extends in a direction away from the bottom guard plate 30. The extended vapor chamber 12 and the extended flow channel plate 13 are attached to each other to form the side plate 20, so as to cooperate with the bottom plate 10 to form the battery tray 10a provided with the accommodation cavity 10b.

In an embodiment, as shown in FIG. 1 and FIG. 2, the battery tray assembly 100 of the present disclosure further includes a sealing member 50. The sealing member 50 is disposed between circumferential edges of the bottom plate 10 and the bottom guard plate 30 and is separately attached to the bottom plate 10 and the bottom guard plate 30. The sealing member 50 is annular and surrounds the middle of the bottom plate 10 and the bottom guard plate 30, to seal space between the bottom plate 10 and the bottom guard plate 30.

During operation of the vehicle, external liquid impurities may enter between the bottom plate 10 and the bottom guard plate 30. These liquid impurities may remain between the bottom plate 10 and the bottom guard plate 30, potentially corroding the bottom plate 10 and the bottom guard plate 30. In addition, external solid impurities may also enter between the bottom plate 10 and the bottom guard plate 30, which may damage the bottom plate 10 and affect sealing effect of the battery tray assembly 100.

It will be understood that, providing the sealing member 50 eliminates a communication path between a gap between the bottom plate 10 and the bottom guard plate 30 and an external environment, preventing external impurities from entering between the bottom plate 10 and the bottom guard plate 30. This reduces impact of the external impurities on sealing performance of the bottom plate 10, thereby improving sealing performance of the battery tray assembly 100 of the present disclosure.

In an embodiment, as shown in FIG. 1 and FIG. 2, the circumferential edge of the bottom guard plate 30 is provided with a flange structure 32 facing the bottom plate 10, and the sealing member 50 is attached to an inner side of the flange structure 32. A spacing between the flange structure 32 and the bottom plate 10 is smaller than a spacing between the middle of the bottom plate 10 and the bottom guard plate 30.

It will be understood that, providing the flange structure 32 on the bottom guard plate 30 can reduce a spacing between edge regions of the bottom guard plate 30 and the bottom plate 10, further reducing a possibility that external impurities enter between the bottom guard plate 30 and the bottom plate 10 through the gap between the bottom guard plate 30 and the bottom plate 10. In addition, providing the sealing member 50 between the flange structure 32 and the bottom plate 10 can fasten the sealing member 50 and further improve sealing performance of the battery tray assembly 100 of the present disclosure.

In this embodiment of the present disclosure, the circumferential edge of the bottom plate 10 may alternatively be flanged in a direction away from the accommodation cavity 10b, to reduce the spacing between the edge regions of the bottom plate 10 and the bottom guard plate 30. It will be understood that in some other embodiments, reduction of the spacing between the edge regions of the bottom plate 10 and the bottom guard plate 30 may alternatively be implemented in another configuration. This is not particularly limited in the present disclosure.

In an embodiment, as shown in FIG. 1 and FIG. 2, the battery tray assembly 100 of the present disclosure further includes a buffer plate 60. The buffer plate 60 is located between the bottom plate 10 and the bottom guard plate 30 and is attached to the bottom plate 10 and the bottom guard plate 30. The buffer plate 60 is elastic. When external impurities act on the bottom guard plate 30, an impact force of the external impurities on the bottom guard plate 30 is transmitted to the bottom plate 10 through the connection member 40. In this way, it will be understood that, providing the elastic buffer plate 60 allows impact of the external impurities on the bottom guard plate 30 to act on the buffer plate 60 and be absorbed by the buffer plate 60, thereby reducing impact on the bottom plate 10.

That is, providing the elastic buffer plate 60 further prevents the external impurities from damaging the bottom plate 10, ensuring integrity and use safety of the battery 201. This further improves protective performance of the battery tray assembly 100 of the present disclosure.

It will be understood that, in some other embodiments, the buffer plate 60 may alternatively be attached to only the bottom plate 10, or to only the bottom guard plate 30. This is not particularly limited in the present disclosure.

In an embodiment, the sealing member 50 is elastic. The sealing member 50 abuts between the bottom plate 10 and the bottom guard plate 30, and when the bottom guard plate 30 is subject to external impact, the bottom guard plate 30 deforms in a direction of the bottom guard plate 30 toward the bottom plate 10. In this way, it will be understood that, through providing the elastic sealing member 50, impact received by the bottom guard plate 30 can be absorbed by the sealing member 50 when the impact is transmitted to the sealing member 50, further reducing impact of the external impact on the bottom plate 10 and further improving protective performance of the battery tray assembly 100 of the present disclosure.

In addition, providing the elastic sealing member 50 can further permit an abutting relationship between the bottom plate 10 and the bottom guard plate 30, further improving sealing effect of the sealing member 50 on the buffer plate 60 during use of the battery tray assembly 100 of the present disclosure, and further improving sealing performance of the battery tray assembly 100 of the present disclosure.

In addition, a hardness of the sealing member 50 is less than a hardness of the buffer plate 60. Because both the sealing member 50 and the buffer plate 60 are elastic, the sealing member 50 and the buffer plate 60 deform during use of the sealing member 50 and the buffer plate 60. A hardness of a material is one of factors that directly affect deformation of the material. A greater hardness of the material indicates stronger resistance of the material to indentation and higher difficulty for the material to deform.

The buffer plate 60 is attached to the bottom plate 10 and the bottom guard plate 30. In this way, it will be understood that when the hardness of the buffer plate 60 is excessively low, the buffer plate 60 has large deformation when absorbing external impact received by the bottom guard plate 30. A limited spacing between the bottom plate 10 and the bottom guard plate 30 may cause external impact acting on the bottom guard plate 30 to act directly on the bottom plate 10 before the buffer plate 60 fully absorbs the external impact.

That is, when the hardness of the buffer plate 60 is excessively low, an absorption rate of the buffer plate 60 to external impacts decreases, resulting in a decrease in protective performance of the buffer plate 60 to the bottom plate 10. This could affect protective performance of the battery tray assembly 100 of the present disclosure.

In addition, when the hardness of the sealing member 50 is excessively high, it is difficult for the sealing member 50 to deform when the sealing member 50 is disposed on the bottom plate 10 and the bottom guard plate 30, which makes it difficult to achieve abutting relationships between the sealing member 50 and the bottom plate 10 and between the sealing member 50 and the bottom guard plate 30, affecting sealing of the sealing member 50 on the buffer plate 60 and affecting sealing performance of the battery tray assembly 100 of the present disclosure.

Therefore, setting the hardness of the sealing member 50 to be less than the hardness of the buffer plate 60 can improve absorption efficiency of the buffer plate 60 on impact received by the bottom guard plate 30, further reduce impact of external impact on the bottom plate 10, and further improve protective performance of the battery tray assembly 100 of the present disclosure.

In addition, this can also reduce mounting difficulty of the sealing member 50, ensure deformation of the sealing member 50 between the bottom plate 10 and the bottom guard plate 30, ensure the abutting relationships between the sealing member 50 and the bottom plate 10 and between the sealing member 50 and the bottom guard plate 30, thereby ensuring sealing effect of the sealing member 50 on the buffer plate 60 and improving sealing performance of the battery tray assembly 100 of the present disclosure.

In an embodiment, a compression amount of the sealing member 50 is greater than or equal to a compression amount of the buffer plate 60. The hardness of the sealing member 50 is less than the hardness of the buffer plate 60, and a greater hardness indicates higher difficulty to deform. In this way, it will be understood that, when the compression amount of the sealing member 50 is less than the compression amount of the buffer plate 60, the sealing member 50 may fail to perform sealing during use when the spacing between the bottom plate 10 and the bottom guard plate 30 widens due to external impact.

For the buffer plate 60, a larger compression amount increases difficulty of disposing the buffer plate 60. The buffer plate 60 is elastic. In this way, it will be understood that, a large compression amount causes the buffer plate 60 to store a large elastic force. A part of the elastic force may act on a joint between the bottom guard plate 30 and the connection member 40 through the bottom guard plate 30, affecting a connection relationship between the bottom guard plate 30 and the bottom plate 10. The other part of the elastic force may act directly on the battery 201 in the accommodation cavity 10b through the bottom plate 10, affecting safety of use of the battery 201.

Therefore, setting the compression amount of the sealing member 50 to be greater than or equal to the compression amount of the buffer plate 60 can achieve the abutting relationships between the sealing member 50 and the bottom plate 10 and between the sealing member 50 and the bottom guard plate 30 during use, ensure sealing effect of the sealing member 50 on the buffer plate 60, and improve sealing performance of the battery tray assembly 100 of the present disclosure.

In addition, this can also reduce impact, on the connection relationship between the bottom plate 10 and the bottom guard plate 30, of the elastic force stored in the buffer plate 60 after compression, and reduce an elastic force of the buffer plate 60 directly acting on the bottom plate 10. This ensures protective performance of the battery tray assembly 201 of the present disclosure.

In an embodiment, a thickness of the buffer plate 60 is between 3 mm and 15 mm in a natural state. It will be understood that, when the thickness of the buffer plate 60 is less than 3 mm, the buffer plate 60 has low absorption capability for external impact, and mitigating effect of the buffer plate 60 on the external impact is reduced, reducing protective effect of the battery tray assembly 100 in the present disclosure. In addition, if the spacing between the bottom plate 10 and the bottom guard plate 30 remains unchanged, and the thickness of the buffer plate 60 is less than 3 mm, it may further be difficult to achieve a compression amount of the buffer plate 60 between the bottom plate 10 and the bottom guard plate 30.

In addition, with the spacing between the bottom plate 10 and the bottom guard plate 30 remaining unchanged, when the thickness of the buffer plate 60 is greater than 15 mm, the compression amount of the buffer plate 60 between the bottom plate 10 and the bottom guard plate 30 increases, increasing mounting difficulty of the buffer plate 60 and increasing the elastic force stored in the buffer plate 60. This may affect the connection relationship between the bottom plate 10 and the bottom guard plate 30, and safety of use of the battery 201 in the accommodation cavity 10b.

If the compression amount of the buffer plate 60 remains unchanged, and the thickness of the buffer plate 60 is greater than 15 mm, the spacing between the bottom plate 10 and the bottom guard plate 30 is increased, reducing capacity of the battery 201 in the battery tray assembly 100. In addition, an increase in the spacing between the bottom plate 10 and the bottom guard plate 30 also causes an increase in distance between a vehicle chassis and the ground, affecting use comfort of a user. Furthermore, an increase in the thickness of the buffer plate 60 also causes an increase in manufacturing costs of the battery tray assembly 100 of the present disclosure.

Therefore, in the battery tray assembly 100 of the present disclosure, setting the thickness of the buffer plate 60 to be between 3 mm and 15 mm can reduce manufacturing costs, ensure spacing between the bottom plate 10 and the bottom guard plate 30, and reduce an action of the elastic force of the buffer plate 60 on the bottom plate 10, and can also ensure absorption efficiency of the buffer plate 60 on external impact and ensure protective performance of the battery tray assembly 100 of the present disclosure.

In this embodiment and subsequent embodiments, a thickness of a structure in a natural state is a thickness of the structure in a normal temperature and pressure environment, and without being subject to tension or pressure other than gravity. In this embodiment, the thickness of the buffer plate 60 in the natural state is a thickness of the buffer plate 60 in a normal temperature and pressure environment, without being subject to tension or pressure.

In an embodiment, a thickness of the sealing member 50 is between 5 mm and 15 mm in a natural state. It will be understood that when the thickness of the sealing member 50 is less than 5 mm, and the spacing between the bottom plate 10 and the bottom guard plate 30 remains unchanged, it may be difficult to achieve a compression amount of the sealing member 50 between the bottom plate 10 and the bottom guard plate 30. As a result, the sealing member 50 may fail to seal the buffer plate 60 during use of the sealing member 50, affecting sealing performance of the battery tray assembly 100 in the present disclosure.

In addition, when the thickness of the sealing member 50 is greater than 15 mm, manufacturing costs of the sealing member 50 increase, increasing manufacturing costs of the battery tray assembly 100 of the present disclosure.

Therefore, in the battery tray assembly 100 of the present disclosure, setting the thickness of the sealing member 50 to be between 5 mm and 15 mm can reduce manufacturing costs, and can also ensure a sealing effect of the sealing member 50 on the buffer plate 60, thereby ensuring improvement of sealing performance of the sealing member 50 of the battery tray assembly 100 of the present disclosure.

In an embodiment, the sealing member 50 is annular in a plane direction of the bottom plate 10, and a thickness size of the sealing member 50 is greater than or equal to 6 mm. It will be understood that, when the thickness of the sealing member 50 is less than 6 mm, the sealing member 50 may be damaged by external impurities, resulting in the sealing member 50 failing to perform sealing. In addition, during use of the sealing member 50, the sealing member 50 may also be damaged due to deformation. This leads to sealing failure.

Therefore, in the battery tray assembly 100 of the present disclosure, setting the thickness of the sealing member 50 to be greater than or equal to 6 mm can avoid sealing failure due to an excessively small thickness during use, thereby ensuring sealing of the sealing member 50 on the buffer plate 60 and improving sealing performance of the sealing member 50 of the battery tray assembly 100 of the present disclosure.

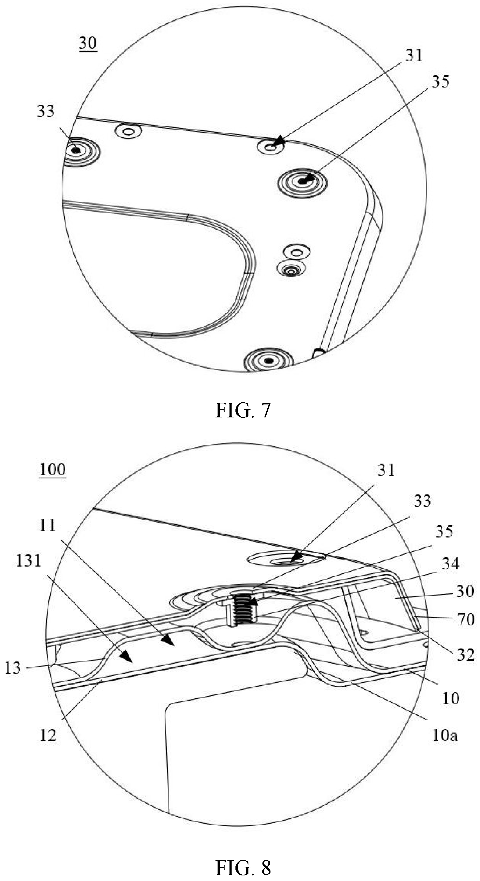

FIG. 6 is a diagram of a structure of the bottom guard plate 30 according to an embodiment of the present disclosure, FIG. 7 is a partially enlarged diagram of the bottom guard plate 30 according to an embodiment of the present disclosure, and FIG. 8 is another partial cross-sectional diagram of the battery tray assembly 100 according to an embodiment of the present disclosure.

As shown in FIG. 6 to FIG. 8, a plurality of mounting bosses 33 protrude from a surface of the bottom guard plate 30 that is away from the bottom plate 10, and the plurality of mounting bosses 33 are spaced apart from each other. A side of the bottom guard plate 30 that faces the bottom plate 10 is provided with a plurality of mounting portions 34. The plurality of mounting portions 34 are spaced apart from each other, and each mounting boss 33 is disposed in alignment with one mounting portion 34. The bottom guard plate 30 is further provided with a mounting hole 35. There are also a plurality of provided mounting holes 35, and each mounting hole 35 sequentially extends through the mounting boss 33 and the mounting portion 34.

A thread is disposed in each mounting hole 35. An external screw can sequentially pass through an external protection structure (such as a mudguard) and the mounting hole 35, and cooperate with the thread in the mounting hole 35 to implement a fixed connection between the external protection structure and the bottom guard plate 30.

It will be understood that, in another embodiment, the external protection structure may alternatively pass through the external protection structure and the mounting hole 35 through rivets, and cooperate with the mounting hole 35 to implement a fixed connection between the external protection structure and the bottom guard plate 30. In some other embodiments, the mounting hole 35 is filled with a solder, to facilitate welding of the external protection structure to the mounting boss 33. In some other embodiments, a fixed connection configuration between the external protection structure and the bottom guard plate 30 may alternatively be another configuration. This is not particularly limited in the present disclosure.

In this embodiment of the present disclosure, the external protection structure may be used to further mitigate impact of external impurities on the bottom guard plate, thereby further improving protective performance of the battery tray assembly 100. For example, the external protection structure is a mudguard.

Therefore, compared with conventional technologies in which a mounting point for connecting to the external protection structure is disposed on the side plate, in the battery tray assembly 100 in the present disclosure, the mounting boss 33 and the mounting portion 34 are disposed on the bottom guard plate 30, so that the mounting boss 33 and the mounting portion 34 may be integrally manufactured, and a procedure required for separately disposing a mounting structure on the side plate 20 is reduced, thereby reducing costs.

In addition, the side plate 20 includes the vapor chamber 12 and the flow channel plate 13 that are attached to each other. Therefore, it will be understood that, compared with the conventional technologies, providing the mounting boss 33 and the mounting portion 34 on the bottom guard plate 30 can further avoid a case in which providing the mounting boss 33 and the mounting portion 34 affects a connection between the vapor chamber 12 and the flow channel plate 13, thereby improving use stability of the battery tray assembly 100 in the present disclosure.

In addition, providing the mounting boss 33 on the bottom guard plate 30 can further increase a contact area between the external protection structure and the battery tray assembly 100, so as to facilitate positioning of the external protection structure and improve stability of a connection between the bottom guard plate 30 and the external protection structure.

In some other embodiments, the bottom guard plate 30 of the battery tray assembly 100 may alternatively only be provided with a mounting boss 33 for a fixed connection to the external protection structure, or may only be provided with a mounting portion 34 for a fixed connection to the external protection structure.

In an embodiment, as shown in FIG. 8, the battery tray assembly 100 of the present disclosure further includes a protection layer 70. The protection layer 70 is coated on the surface of the bottom guard plate 30 that is away from the bottom plate 10. The protection layer 70 is made of a polyvinyl chloride material. The polyvinyl chloride material has good wear resistance performance. In this way, it will be understood that, providing the protection layer 70 can improve wear resistance performance of the bottom guard plate 30 and prevent external solid impurities from scratching the bottom guard plate 30 during operation of the vehicle, thereby ensuring integrity of the bottom guard plate 30. This further improves protective performance of the battery tray assembly 100 in the present disclosure.

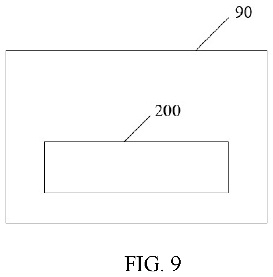

FIG. 9 is a block diagram of a structure of an electrical device 90 according to an embodiment of the present disclosure.

The electrical device 90 provided in the present disclosure includes a battery pack, and the battery pack may be, for example, the battery pack 200 shown in FIG. 1. For example, the electrical device 90 is a vehicle, the vehicle includes a vehicle body and the battery pack 200, and the battery pack 200 is accommodated in the vehicle body to provide electric energy for the vehicle. It will be understood that in some other embodiments, the battery pack in the present disclosure may alternatively be used in another electrical device. This is not particularly limited in the present disclosure.

It will be understood that the terms such as "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of implementations of the present disclosure, unless otherwise specifically limited, "a plurality of" means two or more.

In the descriptions of this specification, references to descriptions of the terms such as "one implementation", "some implementations", "example implementation", "example", "specific example", or "some examples" means that specific features, structures, materials, or features described with reference to implementations or examples are included in at least one implementation or example of the present disclosure. In this specification, example expressions of the foregoing terms do not necessarily indicate same implementations or examples. In addition, specific features, structures, materials, or features described may be combined in a proper manner in any one or more of implementations or examples.

It will be understood that the application of the present disclosure is not limited to the foregoing examples. A person of ordinary skill in the art can make improvements or modifications based on the foregoing descriptions, and all such improvements and modifications shall fall within the protection scope of the appended claims of the present disclosure. A person of ordinary skill in the art may understand that all or some of processes for implementing the foregoing embodiments and equivalent modifications made in accordance with the claims of the present disclosure shall fall within the scope of the present disclosure.

## Claims

1. A battery tray assembly (100), comprising a battery tray (10a), a bottom guard plate (30), and a connection member (40), wherein the battery tray (10a) comprises a bottom plate (10), the connection member (40) is fastened to a surface of the bottom plate (10) that faces the bottom guard plate (30), and the bottom guard plate (30) is connected to the connection member (40).

2. The battery tray assembly (100) according to claim 1, wherein in a direction from the bottom plate (10) toward the bottom guard plate (30), one end of the connection member (40) is fastened to the bottom plate (10), and the other end of the connection member (40) is provided with a connection hole (41), the battery tray assembly (100) further comprises a fastener (44), and the fastener (44) passes through the bottom guard plate (30) and is connected to the connection hole (41), to implement a fixed connection between the bottom guard plate (30) and the bottom plate (10).

3. The battery tray assembly (100) according to claim 1 or 2, wherein a flow channel (11) is provided inside the bottom plate (10), and the flow channel (11) is configured for circulating a heat exchange medium to implement heat exchange of a battery (201).

4. The battery tray assembly (100) according to claim 3, wherein the bottom plate (10) comprises a vapor chamber (12) and a flow channel plate (13) that are fastened, the flow channel plate (13) is located between the vapor chamber (12) and the bottom guard plate (30), a surface of the flow channel plate (13) that faces the vapor chamber (12) is provided with a groove (131), and the vapor chamber (12) covers the groove (131), to cooperatively form the flow channel (11).

5. The battery tray assembly (100) according to claim 4, wherein the connection member (40) is disposed on a side of the flow channel plate (13) that is away from the vapor chamber (12), and is fastened to the flow channel plate (13).

6. The battery tray assembly (100) according to claim 4, wherein the flow channel plate (13) is provided with a clearance hole (132), the clearance hole (132) and the groove (131) are spaced apart from each other in a plane direction of the flow channel plate (13), the connection member (40) is provided with a protrusion portion (42), and the protrusion portion (42) is embedded in the clearance hole (132).

7. The battery tray assembly (100) according to claim 4, wherein in a plane direction of the flow channel plate (13), the groove (131) is provided in the middle of the flow channel plate (13), and edge regions of the flow channel plate (13) and the vapor chamber (12) are attached to each other; and
there are a plurality of disposed connection members (40), and the plurality of connection members (40) are arranged in a circumferential direction of the flow channel plate (13).

8. The battery tray assembly (100) according to claim 4, wherein the vapor chamber (12) is brazed to the flow channel plate (13), and/or the flow channel plate (13) is brazed to the connection member (40).

9. The battery tray assembly (100) according to claim 4, wherein circumferential edges of the vapor chamber (12) and the flow channel plate (13) each extend toward a direction away from the bottom guard plate (30) and are connected to each other to form a side plate (20), the side plate (20) and the bottom plate (10) form an accommodation cavity (10b), and the accommodation cavity (10b) is configured to accommodate the battery (201).

10. The battery tray assembly (100) according to claim 1 or 2, wherein the battery tray assembly (100) further comprises a sealing member (50), and the sealing member (50) is attached between circumferential edges of the bottom plate (10) and the bottom guard plate (30).

11. The battery tray assembly (100) according to claim 10, wherein the circumferential edge of the bottom guard plate (30) is provided with a flange structure (32) facing the bottom plate (10), and the sealing member (50) is attached to an inner side of the flange structure (32).

12. The battery tray assembly (100) according to claim 1 or 2, wherein the battery tray assembly (100) further comprises a buffer plate (60), the buffer plate (60) is disposed between the bottom plate (10) and the bottom guard plate (30), and the buffer plate (60) is at least attached to the bottom plate (10) or the bottom guard plate (30).

13. The battery tray assembly (100) according to claim 1 or 2, wherein a surface of the bottom guard plate (30) that is away from the bottom plate (10) is provided with a plurality of mounting bosses (33) that are spaced apart from each other, and the plurality of mounting bosses (33) are configured to be fastened to an external protection structure.

14. The battery tray assembly (100) according to claim 1 or 2, wherein a side of the bottom guard plate (30) that faces the bottom plate (10) is provided with a plurality of mounting portions (34) that are spaced apart from each other, and the mounting portion (34) is configured to be fastened to an external protection structure.

15. The battery tray assembly (100) according to claim 1 or 2, wherein a surface of the bottom guard plate (30) that is away from the bottom plate (10) is coated with a protection layer (70).

16. A battery pack (200), comprising a battery (201) and the battery tray assembly (100) according to any one of claims 1 to 15, wherein and the battery (201) is accommodated in the battery tray assembly (100).

17. An electrical device (90), comprising the battery pack (200) according to claim 16.
